# EUROPEAN PATENT SPECIFICATION

(11) **EP 3 695 885 B1**
(45) Date of publication and mention of the grant of the patent: **03.12.2025**
(21) Application number: 20156996.9
(22) Date of filing: 12.02.2020
(51) Int. Cl.: A62B 35/00, G01L 5/04

(54) **FALL ARREST DEVICE WITH A SYSTEM FOR ITS MONITRING**
AUFFANGGERÄT MIT EINEM SYSTEM ZU SEINER ÜBERWACHUNG
DISPOSITIF ANTICHUTE AVEC SYSTÈME DE CONTRÔLE DE CELUI-CI

(30) Priority: 15.02.2019 IT 201900002217
(43) Date of publication of application: 19.08.2020
(73) Proprietor: Fin Group S.R.L., 24121 Bergamo (BG) (IT)
(72) Inventor: LUPI, Giuseppe, 24121 Bergamo (IT); DUCI, Stefano, 24059 Urgnano (BG) (IT); MAZZOLENI, Andrea, 24011 Alme' (BG) (IT)
(74) Representative: Gatti, Enrico

(56) References cited:
- EP-A1- 3 175 781
- WO-A1-2020/010005
- WO-A2-2008/019354
- WO-A2-2016/176301
- FR-A1- 2 755 236
- US-A1- 2010 231 402
- US-A1- 2015 014 092
- US-A1- 2018 107 169

## Description

### DESCRIPTION

The present invention relates to a fall arrest device and a system for monitoring said fall arrest device, and more in particular to a system for monitoring a fall arrest device comprising a flexible rope.

Works at height can expose workers to very high risks jeopardising their health and safety, in particular the risks of falling from a height and other serious accidents at work.

The fall arrest devices are formed of a set of anchors placed at a height on the roofs to which the operators are hooked by means of harnesses and relative lanyards. These are installed on the roofs of new buildings for the maintenance thereof and for the periodic maintenance of any photovoltaic roofs or systems.

To date, the devices installed on condominiums are passive devices.

The system of document US20180107169 includes a self-retracting lifeline (SRL) comprising one or more electronic sensors configured to generate data that is indicative of an operation of the SRL, and at least one computing device for receiving the data that is indicative of the operation of the SRL. The system apply the data to a safety model that predicts a likelihood of an occurrence of a safety event associated with the SRL, and perform one or more operations based at least in part on the likelihood of the occurrence of the safety event.

The document WO2008019354 disclose a retractable horizontal lifeline assembly includes a lifeline windable about and paid out from a rotatable drum and a housing. The lifeline is tensioned using a crank that rotates the drum to increase the tension in the lifeline and provides indication when the tension in the lifeline reaches a predetermined level.

The Applicant has attained that the fall arrest devices have characteristics the monitoring of which would allow to satisfy additional needs, such as checking the correct use of the line; identifying events or situations involving the necessary inspection; warning the customer or some other person of any fall that may have occurred during the use of the device; warning the customer or some other person of the presence of unauthorised or unequipped personnel; warning the customer or some other person that the device was used.

All this to provide the customer with a better management of the fall arrest device and the maintenance staff with a better management of the periodic inspections.

The aim of the present invention is therefore to provide a system for monitoring a fall arrest device that meets the requirements listed above.

Another aim is to provide a system for monitoring an active fall arrest device.

In accordance with the present invention, these aims and others still are achieved by a fall arrest device having a system for monitoring a fall arrest device according to claim 1.

Further characteristics of the invention are described in the dependent claims.

The advantages of this solution compared to solutions of the known art are various.

The fall arrest device of claim 1 incorporates a monitoring device that performs the function of monitoring a flexible rope type fall arrest device. Such device is fixed to the end points of the systems (poles or brackets) equipped with a battery to guarantee a sufficient autonomy for this task, preferably able to geo-locate the system and manage the maintenance.

It allows to warn personnel in the case of critical events, to facilitate periodic inspections and to possibly detect and store data for statistical purposes.

The characteristics and advantages of the present invention will become evident from the following detailed description of a practical embodiment thereof, illustrated by way of a non-limiting example in the attached drawings, wherein:

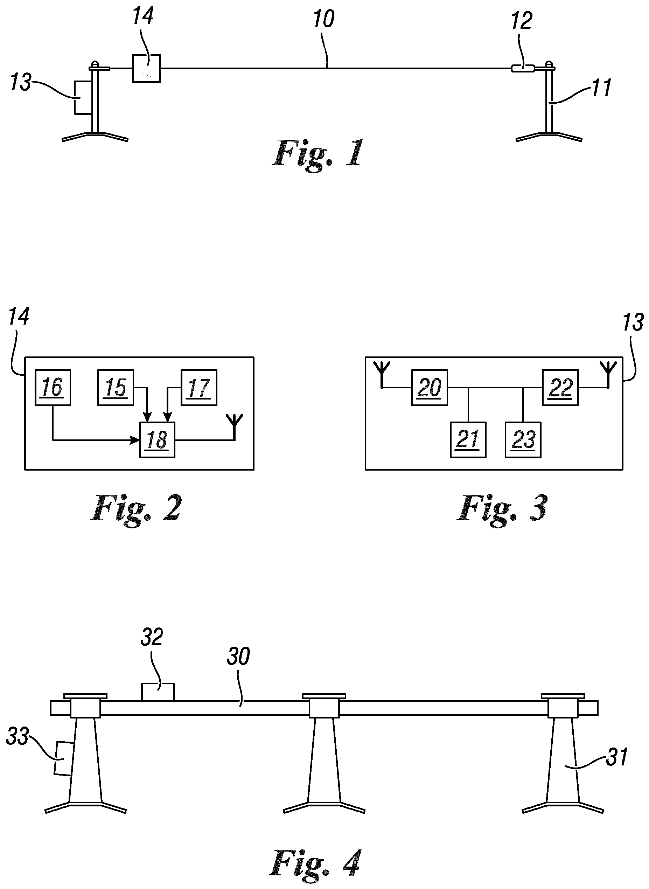

Figure 1 schematically shows a system for monitoring a fall arrest device having a flexible rope, according to the present invention;
Figure 2 schematically shows a measuring device for monitoring a fall arrest device with a flexible rope, according to the present invention;
Figure 3 schematically shows a control unit for monitoring a fall arrest device having a flexible rope, according to the present invention;
Figure 4 schematically shows a system for monitoring a fall arrest device of a track type, according to the present invention;

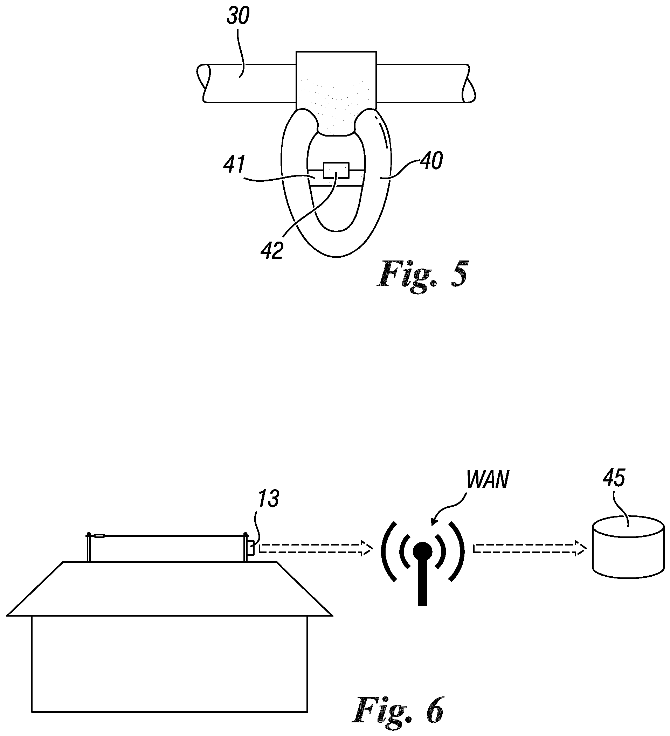

Figure 5 schematically shows a hook of a system for monitoring a fall arrest device of a track type, according to the present invention;
Figure 6 schematically shows a network of a system for monitoring a fall arrest device, according to the present invention.

With reference to the attached figures, a fall arrest device comprising a system for monitoring a fall arrest device having a flexible rope, according to the present invention, comprises a rope 10 anchored, by means of anchorage devices 11 in a known manner, to a surface such as a roof. It comprises a tensioning system 12 placed between the rope 10 and an anchorage device 11. It therefore comprises a control unit 13 preferably fixed to an anchorage device 11 and a measuring device 14 fixed at the end to the rope 10.

The measuring device 14 comprises a sensor 15 for measuring the oscillations of the cable for example, alone or in combination, accelerometer, gyroscope, vibration sensor. An example of the measurements carried out are the acceleration on the X axis (in thousandths of G), the acceleration on the y axis (in thousandths of G) and the acceleration on the Z axis (in thousandths of G).

It furthermore comprises a sensor 16 for measuring the cable tension by using, for example, a load cell. An example of a measurement carried out is the force applied on the cable (in Kg).

It preferably also comprises a sensor 17, for atmospheric or environmental measurements, such as temperature and humidity sensors. An example of measurements carried out are the temperature (in °C) and the relative humidity (in %).

It also comprises a communication device 18 communicating with the wireless control unit 13 for example via Bluetooth. Alternatively, the device 14 can be connected to the control unit 13 via a wire.

The power-supply of the device 14 is a battery but, if the location allows it, it can also be connected to the mains.

The sensors 15, 16 and 17 are preferably all incorporated in the device 14, but they can also be placed separately in different positions, yet being capable of carrying out the measurements required.

The presence of the sensor 16, for measuring the cable tension, facilitates the measurement of the cable tension, but in an alternative embodiment of the present invention, the sensor 16 can be omitted and the measurement of the cable tension can be carried out based only on the sensor 15 for measuring the oscillations of the cable.

The cable tension can in fact be defined by knowing the length and inclination of the cable (e.g. by using the accelerometers on the three axes). In fact, by knowing the arrow (derived from the inclination of the cable), the length and the properties of the cable, (elastic modulus, weight, etc.) it is possible to apply the theory of ropes (overhead lines) and therefore obtain the tension of the cable.

In this case, it is necessary to process the data measured by the sensor 15 in order to measure the oscillations of the cable.

The control unit 13 comprises a communication device 20 communicating with the device 14 and in particular with the device 18, for example of the Bluetooth type, a memory 21, a communication device 22 communicating with an external network, and a microcontroller 23 that manages the system.

In an alternative embodiment, a system for monitoring a fall arrest device of a track type comprises a track 30 that is anchored in a known manner to a surface such as, for example, a roof by means of anchorage devices 31.

At least one monitoring device 32 is placed on track 30.

A control unit 33 is placed on the track 30, or on the anchorage device 31, the unit receives the information from the device 32.

The monitoring device 32, in this case, comprises a sensor 15 for measuring the oscillations of the cable such as, for example, alone or in combination, accelerometer, gyroscope, vibration sensor.

Preferably it also comprises a sensor 17, for atmospheric or environmental measurements, such as temperature and humidity sensors.

It does not comprise a sensor 16 for measuring the tension of the cable, since it is not possible to place the sensor at the head of the track 30.

In this case, for measuring the significant difference in acceleration due to the sudden tension of the safety cable, a cable 41, on which accelerometers 42 are fixed, is applied to the hook 40 which is fastened to track 30. The accelerometers 42 communicate with the control unit 13. A carabiner is used to connect the operator to the hook 40.

The control unit 13, and in particular the communication device 22, is connected to a WAN (Wide Area Network) and to a control and data collection centre 45.

At the WAN level, two operating modes can be distinguished.

Systems with a direct connection of the control unit 13 to the WANs. In this case, as in the case of individual installations (for example, several roofs in several cities), the control unit sends the data directly to WANs (for example, cellular networks).

Systems with a connection using a LAN (Local Area Network). In this case, the connection takes place between several control units and only one control unit or at least two of them (for redundancy) defined as Master manage the function of sending to the WAN.

The non-Master control units are defined as Slave and are responsible for local data collection and for communicating the collected data from the same site to Master control units. The Master control units generally also operate as Slave, therefore, in addition to managing the communication coming from the various Slave control units, they also measure the data of the lifeline to which they are connected.

A simple geolocation of the control unit 13 is provided. This will be stored during the installation step of the control unit, and transmitted to the WAN for the recognition of the sent data.

The system is designed to limit energy consumption so that all the equipment can be powered by battery. To do this, data transmissions are limited by using intervention thresholds in order to activate the equipment only when required.

To obtain the result, the following strategies have been introduced by optimising:
- Reduction of the microcontroller frequency.
- Switching-off of the system when it is not required.
- Optimisation the number of sensor readings.
- Optimisation the number of WAN communications.
optimising:
- Reduction of the microcontroller frequency.
- Switching-off of the system when it is not required.
- Optimisation the number of sensor readings.
- Optimisation the number of WAN communications.

In addition, the duration of a battery pack is related to environmental factors such as temperature and humidity.

Thermal insulators and containers with a suitable degree of impermeability are therefore used.

The measurements of the environmental data carried out by the sensors 17 allow to correlate the tension and oscillation measurements of the cable with the relevant magnitudes related to atmospheric conditions. The most obvious case is the correlation of the cable tension with the temperature.

Through the measurement of the state of tension of the cable over time as a function of the temperatures, it is possible to devise prevention and improvement modes to avoid the deterioration of the system's performance.

For example, one of the arrangements for phenomena related to the sensors installed on the fall arrest systems and sent to the control and data collection centre 45, the control, maintenance and alert functions must be managed and the operators of the control centre, the maintenance staff and the end user must be informed, respectively.

The control centre receives the data from all the fall arrest systems and then identifies and sorts the data and sends possible alerts to the operators of the control centre, to the maintenance staff and to the end user according to the needs.

For each data group, the detected state for each suspect cable oscillation is checked, and four states are recognised, i.e. hooked, fall of the hooked person, oscillation due to wind or other atmospheric agents, falling objects or animal presence.

Recognisability patterns of the four states have been defined. The patterns are constructed starting from repeated field measurements that determine "usual" data usage with respect to the categories that are wished to be identified.

For example, the states can be defined as follows.

If the sensor 15 measures an acceleration variation and the cable tension, measured with the sensor 16, remains within a pre-set value the hooked state is achieved.

If the sensor 15 measures an acceleration variation and the cable tension, measured with the sensor 16, exceeds a pre-set value the state of falling is achieved.

If the sensor 15 measures a continuous acceleration variation within a pre-set value and the cable tension, measured with the sensor 16, remains within a pre-set value the oscillation state is achieved.

If the sensor 15 measures an immediate acceleration variation within a pre-set value and the cable tension, measured with the sensor 16, remains within a pre-set value the state of falling objects is achieved.

When an alert status is recognised, the control centre 45 sends an alert to the person(s) in charge.

## Claims

1. A fall arrest device, where said fall arrest device is a lifeline of the flexible rope type, comprising a rope (10) anchored, by means of anchorage devices (11), to a surface such as a roof in a horizontal position; and a system for monitoring a fall arrest device, said system comprising:
- a measuring device (14) fixed at the end to said rope (10), said measuring device (14) comprising a first sensor (15) configured for measuring the oscillations of said fall arrest device and a second sensor (16) configured for measuring the tension of said fall arrest device; and
- a control unit (13) being electrically connected to said first sensor (15) and to said second sensor (16);
wherein said control unit (13) being electrically connected to a control centre (45);
said control centre (45) being designed to evaluate whether an event selected from among a series of predefined events has occurred,
based on the measurements carried out by said first sensor (15) and said second sensor (16);
in the case of a positive outcome, said control centre (45) being designed to warn of the occurred event, with a signal;
wherein said occurred event is an event selected from among a series of predefined events comprises the following events: hooked, fall of the hooked person, oscillation due to atmospheric agents, falling objects or presence of animals.

2. The fall arrest device according to claim 1, **characterised in that** said system comprises a sensor, for atmospheric or environmental measurements.

3. The fall arrest device according to claim 1, **characterised in that** said control unit (13) is connected wirelessly to said control centre (45).

4. The fall arrest device according to claim 1, **characterised in that** said first sensor (15) comprises at least one of the following sensors: accelerometer, gyroscope, vibration sensor.

5. The fall arrest device according to claim 1, **characterised in that** said second sensor (16) comprises a load cell.

6. The fall arrest device according to claim 1, **characterised in that** in the event of a positive outcome said control centre (45) is designed to warn the operators of the control centre, the maintenance staff and the end user of the occurred event.

## Patentansprüche

1. Eine Absturzsicherungsvorrichtung, wobei die genannte Absturzsicherungsvorrichtung eine Rettungsleine vom Typ eines flexiblen Seils ist, die ein Seil (10) umfasst, das mittels Verankerungsvorrichtungen (11) an einer Oberfläche, beispielsweise einem Dach, in horizontaler Position verankert ist; und ein System zur Überwachung einer Absturzsicherungsvorrichtung, wobei das genannte System Folgendes umfasst:
- eine Messvorrichtung (14), die am Ende des genannten Seils (10) befestigt ist, wobei die genannte Messvorrichtung (14) einen ersten Sensor (15) zum Messen der Schwingungen der genannten Absturzsicherungsvorrichtung und einen zweiten Sensor (16) zum Messen der Spannung der genannten Absturzsicherungsvorrichtung umfasst; und
- eine Steuereinheit (13), die elektrisch mit dem genannten ersten Sensor (15) und dem genannten zweiten Sensor (16) verbunden ist;
wobei die genannte Steuereinheit (13) elektrisch mit einer Steuerzentrale (45) verbunden ist;
wobei die genannte Steuerzentrale (45) darauf ausgelegt ist, anhand der vom genannten ersten Sensor (15) und dem genannten zweiten Sensor (16) durchgeführten Messungen zu bewerten, ob ein aus einer Reihe vordefinierter Ereignisse ausgewähltes Ereignis eingetreten ist.
wobei die genannte Steuerzentrale (45) im Falle eines positiven Ergebnisses darauf ausgelegt ist, mit einem Signal auf das eingetretene Ereignis aufmerksam zu machen;
wobei das genannte eingetretene Ereignis ein Ereignis ist, das aus einer Reihe vordefinierter Ereignisse ausgewählt wird, die die folgenden Ereignisse umfassen: Eingehakt, Sturz der eingehakten Person, Schwingung aufgrund von Witterungseinflüssen, herabfallenden Gegenständen oder Anwesenheit von Tieren.

2. Die Absturzsicherungsvorrichtung nach Anspruch 1, **dadurch gekennzeichnet, dass** das genannte System einen Sensor für atmosphärische Messungen oder Umweltmessungen umfasst.

3. Die Absturzsicherungsvorrichtung nach Anspruch 1, **dadurch gekennzeichnet, dass** die genannte Steuereinheit (13) drahtlos mit der genannten Steuerzentrale (45) verbunden ist.

4. Die Absturzsicherungsvorrichtung nach Anspruch 1, **dadurch gekennzeichnet, dass** der genannte erste Sensor (15) mindestens einen der folgenden Sensoren umfasst: Beschleunigungsmesser, Gyroskop, Vibrationssensor.

5. Die Absturzsicherungsvorrichtung nach Anspruch 1, **dadurch gekennzeichnet, dass** der genannte zweite Sensor (16) eine Lastzelle umfasst.

6. Die Absturzsicherungsvorrichtung nach Anspruch 1, **dadurch gekennzeichnet, dass** die genannte Steuerzentrale (45) im Falle eines positiven Ergebnisses darauf ausgelegt ist, die Bediener der Steuerzentrale, das Wartungspersonal und den Endbenutzer vor dem eingetretenen Ereignis zu warnen.

## Revendications

1. Dispositif d'arrêt de chute, où ledit dispositif d'arrêt de chute est un cordage de sécurité du type corde flexible, comprenant une corde (10) ancrée, au moyen de dispositifs d'ancrage (11), à une surface telle qu'un toit en position horizontale; et un système pour surveiller un dispositif d'arrêt de chute, ledit système comprenant:
- un dispositif de mesure (14) fixé à l'extrémité de ladite corde (10), ledit dispositif de mesure (14) comprenant un premier capteur (15) configuré pour mesurer les oscillations dudit dispositif d'arrêt de chute et un second capteur (16) configuré pour mesurer la tension dudit dispositif d'arrêt de chute; et
- une unité de commande (13) étant reliée électriquement audit premier capteur (15) et audit second capteur (16);
dans lequel ladite unité de commande (13) est reliée électriquement à un centre de commande (45);
ledit centre de commande (45) étant conçu pour évaluer si un événement sélectionné parmi une série d'événements prédéfinis s'est produit ou non,
en fonction des mesures effectuées par ledit premier capteur (15) et ledit second capteur (16);
en cas de résultat positif, ledit centre de commande (45) étant conçu pour avertir de l'événement survenu, avec un signal;
dans lequel ledit événement survenu est un événement sélectionné parmi une série d'événements prédéfinis et comprend les événements suivants: accroché, chute de la personne accrochée, oscillation en raison des agents atmosphériques, chute d'objets ou présence d'animaux.

2. Dispositif d'arrêt de chute selon la revendication 1, **caractérisé en ce que** ledit système comprend un capteur pour des mesures atmosphériques ou environnementales.

3. Dispositif d'arrêt de chute selon la revendication 1, **caractérisé en ce que** ladite unité de commande (13) est reliée sans fil audit centre de commande (45).

4. Dispositif d'arrêt de chute selon la revendication 1, **caractérisé en ce que** ledit premier capteur (15) comprend au moins un des capteurs suivants: un accéléromètre, un gyroscope, un capteur de vibration.

5. Dispositif d'arrêt de chute selon la revendication 1, **caractérisé en ce que** ledit second capteur (16) comprend une cellule dynamométrique.

6. Dispositif d'arrêt de chute selon la revendication 1, **caractérisé en ce que**, en cas de résultat positif, ledit centre de commande (45) est conçu pour avertir les opérateurs du centre de commande, le personnel d'entretien et l'utilisateur final de l'événement survenu.
